# FASCICULE DE BREVET EUROPEEN

(11) **EP 0 896 408 B1**
(45) Date de publication et mention de la délivrance du brevet: **25.05.2005**
(21) Numéro de dépôt: 98450011.6
(22) Date de dépôt: 20.07.1998
(51) Int. Cl.: H02G 1/02

(54) **Platine d'ancrage sur façade d'immeuble notamment pour équipements de télécommunication ou de distribution électrique**
Befestigungshalterung auf Gebäudefassaden,insbesondere für Telekommunkationsanlage oder elektrische Stromversorgungsvorrichtung
Fastening holder plate on building wall, in particular for telecommunication or electrical distribution equipment

(30) Priorité: 06.08.1997 FR 9710270
(43) Date de publication de la demande: 10.02.1999
(73) Titulaire: Eurotel SAS, 33240 Saint Gervais (FR)
(72) Inventeur: Renaud, Marie-Christine, 33240 Saint Gervais (FR)
(74) Mandataire: Thébault, Jean-Louis

(56) Documents cités:
- FR-A- 2 642 577
- GB-A- 2 276 197

## Description

La présente invention a trait notamment aux équipements de télécommunication ou de distribution électrique nécessitant l'installation en façade d'immeuble ou analogue, de boîtiers, d'appareillages, d'arrêts de câble, etc... dont la mise en place et l'entretien requièrent pour le personnel qui en est chargé, un point d'ancrage au voisinage immédiat du site pour la fixation, à des fins de sécurité, d'un harnais ou d'une ceinture anti-chute que doit porter ledit personnel, (FR - A - 2 642 577).

Il n'existe pas à l'heure actuelle de points d'ancrage rationnels et efficaces dont puisse disposer sur les façades d'immeubles le personnel de service au voisinage de l'endroit où doit être installer un équipement tel qu'un boîtier de télécommunication ou un arrêt de câble électrique, et le personnel doit s'assurer d'un point d'ancrage pour effectuer son intervention, comme il le peut.

La présente invention a précisément pour but de proposer un moyen d'ancrage simple, efficace et adapté aux divers équipements à installer, entretenir ou réparer en façades d'immeubles ou analogue.

A cet effet, l'invention a pour objet une platine d'ancrage sur façade d'immeuble notamment pour équipements de télécommunication ou de distribution électrique, caractérisée en ce qu'elle est constituée d'une pièce plate métallique en forme générale de T, munie d'une pluralité de trous de fixation sur la paroi de l'immeuble ou analogue, réalisés sur les deux branches du T et, sur la branche verticale du T, d'une patte en saillie percée d'un orifice d'introduction d'un organe d'ancrage solidaire d'un équipement de sécurité, notamment du type harnais, porté par la personne chargée de la mise en place, réparation ou entretien desdits équipements.

Selon un mode de réalisation plus spécialement destiné à un équipement du type arrêt de câble, ladite platine comporte sur au moins l'une des deux parties de la branche horizontale du T un trou destiné au passage d'une queue de cochon ou analogue, ainsi qu'éventuellement un perçage de dimension approprié, disposé sensiblement à l'intersection des deux branches du T pour le passage dudit câble à travers la façade de l'immeuble.

Selon un autre mode de réalisation plus spécialement destiné à un équipement du type boîtier de raccordement protection, ladite platine comporte, en outre, des trous de fixation dudit boîtier au droit du croisement des deux branches du T, ainsi que, d'un côté et/ou de l'autre de la branche horizontale du T, un trou de passage d'une queue de cochon pour la desserte dudit boîtier.

D'autres caractéristiques et avantages ressortiront de la description qui va suivre de modes de réalisation de la platine de l'invention, description donnée à titre d'exemple uniquement et en regard des dessins annexés sur lesquels :
- Figure 1 est une vue de face d'une platine d'ancrage plus particulièrement destinée à une boîte de distribution fixée directement sur une façade ou un mur ;
- Figure 1a est une vue de dessus d'une bride auxiliaire de la platine de la figure 1 ;
- Figure 2 est une vue de gauche de la platine de la figure 1 ;
- Figure 3 est une vue de face d'une platine d'ancrage plus particulièrement destinée à un arrêt de câble ;
- Figure 4 est une vue de face d'une platine d'ancrage plus particulièrement destinée à un boîtier de raccordement protection, et
- Figure 5 est une vue de face d'une variante de la platine de la figure 1.

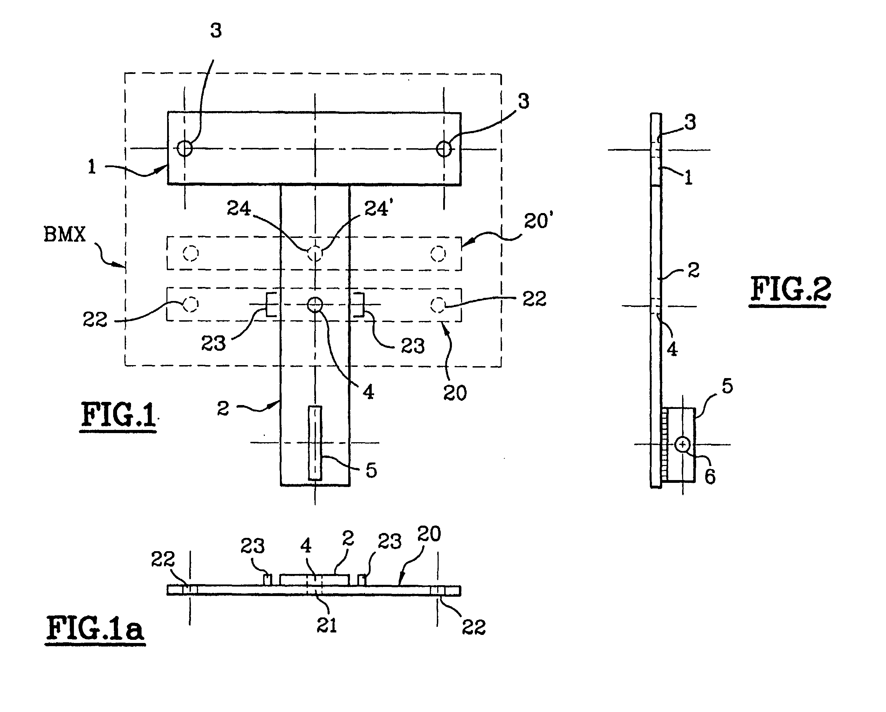

Sur les figures 1 et 2, on a représenté une platine d'ancrage selon l'invention.

Elle est constituée de deux fers plats rectangulaires 1 et 2, soudés bord à bord pour former un T dont les branches respectives horizontale et verticale sont définies par les fers 1 et 2.

La pièce plate ainsi réalisée, notamment en acier inoxydable, présente, à titre d'exemple, une épaisseur de 6 mm, la largeur des fers 1 et 2 est de 50 mm et la longueur des fers 1, 2 respectivement 215 et 207 mm.

Aux deux extrémités de la branche horizontale 1 est prévu un trou 3, par exemple de 12 mm de diamètre, cependant qu'un autre trou 4, identique aux deux autres, est ménagé sensiblement dans la zone centrale de la branche verticale.

En partie inférieure de la branche verticale 2 et dans son axe est soudée une petite patte formée d'un fer plat rectangulaire 5, perpendiculaire au fer 2 et présentant un trou central 6, par exemple de 15 mm de diamètre. Les dimensions de la patte 5 sont par exemple de 50 mm de longueur, 25 mm de largeur et 6 mm d'épaisseur.

Les trous 3, 4 servent à la fixation de la platine sur la façade d'un immeuble ou analogue, tel que mur, etc...

Cette fixation s'opère par exemple à l'aide de chevilles adaptées, en inox pour des murs pleins ou chimiques pour des supports creux.

Le trou 6 de la patte 5 sert à l'engagement d'un mousqueton de la ceinture anti-chute d'un harnais de sécurité, ou autre dispositif de sécurité, porté par la personne chargée de mettre en place sur l'immeuble ou le mur, au droit de fixation de la platine de l'invention, l'équipement, électrique, téléphonique ou autre.

Il peut s'agir par exemple d'une boîte de distribution, dénommée habituellement BMX, qui sera rapportée sur la platine de l'invention et fixée à l'aide d'une bride auxiliaire 20 représentée en tiretés sur la figure 1 et en vue de dessus sur la figure la, une telle boîte étant symbolisée en BMX sur la figure 1.

La bride 20 est une bande métallique rectangulaire munie, en son centre, d'un trou 21 par exemple de diamètre 12mm en correspondance avec le trou 4 de la platine et, à ses deux extrémités, d'un trou 22 également de 12 mm de diamètre.

Le trou 21 sert à la fixation sur la façade d'immeuble de l'ensemble platine-bride, cependant que les trous 22 servent à la fixation sur la bride 20 d'une boîte BMX.

En 23 sont représentés des retours réalisés par des crevés, se positionnant de part et d'autre de la branche verticale 2 de la platine, en direction de la façade pour un bon calage-positionnement de la bride.

Sur la figure 1 en 20' est représentée une autre bride destinée à des boîtes BMX anciens modèles et placée un peu plus haut que la bride 20. A cet effet, la bride 20' est munie d'un trou 24 percé à 7 mm, pour une fixation sur la platine dans un trou 24' taraudé à 5 mm, au dessus du trou 4.

Une fois la boîte BMX fixée, elle laisse bien entendu apparente et libre la patte 5 servant d'ancrage de sécurité pour le personnel d'installation ou de maintenance ultérieure de l'équipement.

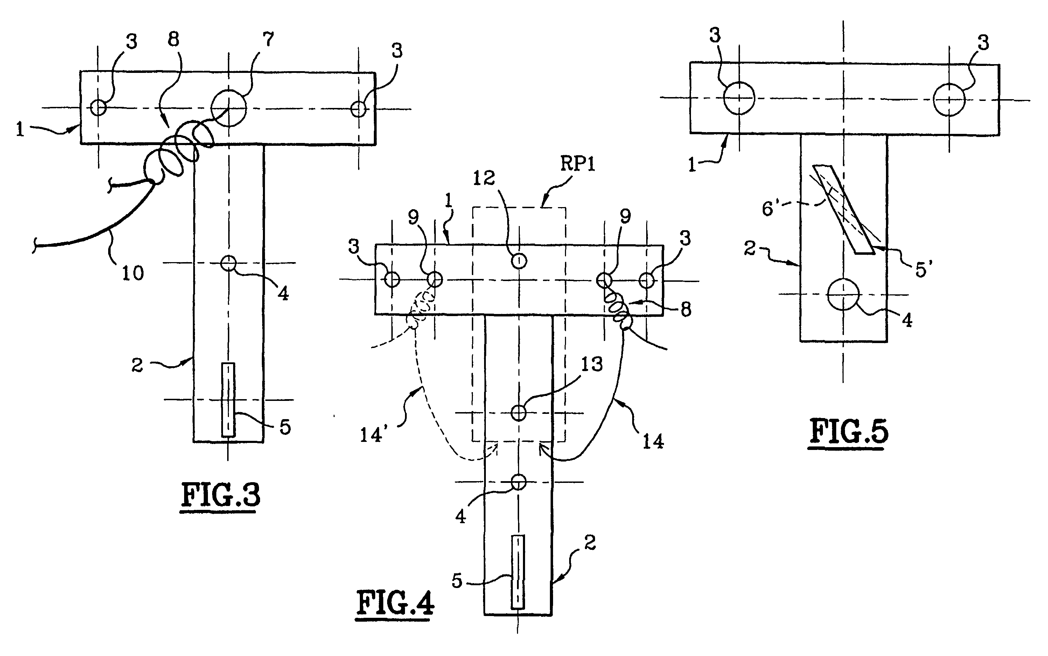

La figure 3 illustre un mode de réalisation de la platine destiné plus particulièrement à un arrêt de câble en façade d'immeuble par exemple.

La platine est constituée des mêmes éléments 1, 2, 3, 4, 5 et 6 que la platine des figures 1 et 2 aux ajustements dimensionnels près.

La platine de la figure 3 comporte, en outre, en partie centrale de la branche horizontale 1 du T, un trou 7, par exemple de 20 mm, pour permettre la fixation d'une queue de cochon symbolisée en 8 sur la figure 3, ancrée dans le mur.

En 10 est représentée le câble ancré à la queue de cochon 8.

La figure 4 illustre une platine plus particulièrement destinée à recevoir une boîte de raccordement protection, dénommée RP1 et symbolisée par cette référence sur la figure 4.

La platine de la figure 4 comporte des trous 3, 4 comme la platine de la figure 3 et deux trous 9, par exemple de 9 mm de diamètre ménagés dans l'une et/ou l'autre partie d'extrémité de la branche horizontale 1, en déca des trous 3. Les deux trous 12,13 servent à la fixation sur la platine de la boîte RP1, par des chevilles appropriées.

Par ailleurs, le trou 4 de fixation de la branche verticale 2 de la platine est légèrement décalé en direction de la patte 5 pour faciliter la fixation de la boîte RP1.

L'un ou l'autre des trous 9 est utilisé pour la fixation d'une queue de cochon 8 d'arrêt d'un câble 14 (14') de liaison avec la boîte RP1, arrivant d'un côté ou de l'autre de la platine.

La figure 5 illustre une variante de réalisation de la platine de la figure 1, selon laquelle la patte 5' pour la fixation d'un organe d'ancrage est, d'une part, disposée dans la partie centrale de la branche verticale 2, entre la branche horizontale 1 et le trou de fixation 4 et, d'autre part, inclinée de l'ordre de 20° par rapport à l'axe de la branche verticale 2, pour faciliter l'accrochage dudit organe d'ancrage (mousqueton par exemple) dans le trou 6' lequel présente lui-même un axe incliné par rapport à la branche verticale 2 d'environ 45°.

Il est à noter par ailleurs, que notamment la platine d'ancrage pour arrêt de câble de la figure 3 peut avantageusement être également munie d'une patte 5 inclinée sur l'axe de la branche.verticale 2.

Enfin, l'invention n'est évidemment pas limitée aux modes de réalisation représentés et décrits ci-dessus, mais en couvre au contraire toutes les variantes dans le cadre des revendications, notamment en ce qui concerne les formes et dimensions de la platine, le matériau utilisé, la distribution, le diamètre et la forme des divers trous ou passages.

## Revendications

1. Platine d'ancrage sur façade d'immeuble notamment pour équipements de télécommunication ou de distribution électrique, **caractérisée en ce qu'**elle est constituée d'une pièce plate métallique (1,2) en forme générale de T, munie d'une pluralité de trous (3, 4) de fixation sur la paroi de l'immeuble ou analogue, réalisés sur les deux branches (1, 2) du T et, sur la branche verticale (2) du T, d'une patte en saillie (5) percée d'un orifice (6) d'introduction d'un organe d'ancrage solidaire d'un équipement de sécurité, notamment du type harnais, porté par la personne chargée de la mise en place, réparation ou entretien desdits équipements.

2. Platine suivant la revendication 1 plus spécialement destinée à un équipement du type arrêt de câble, **caractérisée en ce qu'**elle comporte un perçage (7) de dimension approprié, disposé sensiblement à l'intersection des deux branches (1, 2) du T pour la fixation d'une queue de cochon (8) ou analogue, d'arrêt de câble.

3. Platine suivant la revendication 1, plus spécialement destinée à un équipement du type boîtier de raccordement protection (RP1), **caractérisée en ce qu'**elle comporte, en outre, des trous (12, 13) de fixation dudit boîtier (RP1) au droit du croisement des deux branches (1, 2) du T, ainsi que, d'un côté et/ou de l'autre de la branche horizontale (1) du T, un trou (9) de passage d'une queue de cochon (8) pour la desserte dudit boîtier RP1.

4. Platine suivant la revendication 1, plus particulièrement destinée à un équipement du type boîte de distribution (BMX), **caractérisé en ce qu'**elle comporte, en outre, une bride auxiliaire (20,20') de fixation de ladite boîte, rapportée et fixée sur la branche verticale (2) du T.

5. Platine suivant l'une des revendications 1 à 4, **caractérisée en ce qu'**elle est constituée de deux fers plats rectangulaires (1, 2) soudés, ladite patte (5) portant ledit orifice (6) d'introduction d'un organe d'ancrage étant constituée également d'un fer plat rectangulaire soudé sur l'une des faces de la branche verticale (2) du T perpendiculairement à celle-ci.

6. Platine suivant la revendication 5, **caractérisée en ce que** ladite patte (5') portant ledit orifice (6) d'introduction d'un organe d'ancrage est inclinée sur l'axe de la branche verticale (2).

7. Platine suivant la revendication 6, **caractérisée en ce que** le trou (6') de la patte (5') est lui-même incliné d'environ 45° par rapport à ladite branche verticale (2).

8. Platine suivant l'une des revendications 5 à 7, **caractérisée en ce que** ladite patte (5) portant ledit orifice (6) d'introduction d'un organe d'ancrage est disposée à l'extrémité inférieure de la branche verticale (3).

9. Platine suivant les revendications 5 ou 6, **caractérisée en ce que** ladite patte (5') portant ledit orifice (6') d'introduction d'un organe d'ancrage est disposée dans la partie centrale de la branche verticale (2).

## Patentansprüche

1. Platine für die Verankerung an einer Gebäudefassade, insbesondere für Telekommunikations- oder Elektroverteilungsanlagen, **dadurch gekennzeichnet, dass** sie aus einem Metallplattenteil (1, 2) mit allgemeiner T-Form gebildet ist, das versehen ist mit mehreren Löchern (3, 4) für die Befestigung an der Gebäudewand oder dergleichen, die in den zwei Schenkeln (1, 2) des T verwirklicht sind, und am vertikalen Schenkel (2) des T mit einem vorstehenden Ansatz (5), *durch* den eine Öffnung (6) für die Einführung eines mit einer Sicherheitsausrüstung fest verbundenen Verankerungsorgans, insbesondere des Geschirrtyps, verläuft, das von der Person getragen wird, die mit der Anbringung, Reparatur oder Wartung der Anlagen beauftragt ist.

2. Platine nach Anspruch 1, die vor allem für eine Ausrüstung des Kabelfixierungstyps bestimmt ist, **dadurch gekennzeichnet, dass** sie eine Durchgangsbohrung (7) mit geeigneten Abmessungen aufweist, die im Wesentlichen im Schnittpunkt der beiden Schenkel (1, 2) des T angeordnet ist, um einen Schwanz (8) oder dergleichen der Kabelfixierung zu befestigen.

3. Platine nach Anspruch 1, die vor allem für eine Ausrüstung des Schutzverbindergehäuse-Typs (RP1) bestimmt ist, **dadurch gekennzeichnet, dass** sie außerdem Löcher (12, 13) für die Befestigung des Gehäuses (RP1) am Ort der Kreuzung der zwei Schenkel (1, 2) des T sowie auf einer Seite und/oder auf der anderen Seite des horizontalen Schenkels (1) des T ein Durchgangsloch (9) für einen Schwanz (8) für die Anbindung des Gehäuses (RP1) umfasst.

4. Platine nach Anspruch 1, die vor allem für eine Ausrüstung des Typs Verteilerkasten (BMX) bestimmt ist, **dadurch gekennzeichnet, dass** sie außerdem einen Hilfsflansch (20, 20') für die Befestigung des Kastens, der mit dem vertikalen Schenkel (2) des T verbunden und daran befestigt ist, umfasst.

5. Platine nach einem der Ansprüche 1 bis 4, **dadurch gekennzeichnet, dass** sie aus zwei verschweißten rechtwinkligen Eisenplatten (1, 2) gebildet ist, wobei der Ansatz (5), der die Öffnung (6) für die Einführung eines Verankerungsorgans trägt, ebenfalls aus einer rechtwinkligen Eisenplatte gebildet ist, die an eine der Flächen des vertikalen Schenkels (2) des T senkrecht hierzu angeschweißt ist.

6. Platine nach Anspruch 5, **dadurch gekennzeichnet, dass** der Ansatz (5'), der die Öffnung (6) für die Einführung eines Verankerungsorgans trägt, zur Achse des vertikalen Schenkels (2) geneigt ist.

7. Platine nach Anspruch 6, **dadurch gekennzeichnet, dass** das Loch (6') des Ansatzes (5') seinerseits in Bezug auf den vertikalen Schenkel (2) um etwa 45° geneigt ist.

8. Platine nach einem der Ansprüche 5 bis 7, **dadurch gekennzeichnet, dass** der Ansatz (5), der die Öffnung (6) für die Einführung des Verankerungsorgans trägt, am unteren Ende des vertikalen Schenkels (3) angeordnet ist.

9. Platine nach den Ansprüchen 5 oder 6, **dadurch gekennzeichnet, dass** der Ansatz (5'), der die Öffnung (6') für die Einführung des Verankerungsorgans trägt, im Mittelabschnitt des vertikalen Schenkels (2) angeordnet ist.

## Claims

1. A building façade anchoring plate, in particular for telecommuniation or electrical distribution equipment, **characterised in that** it is formed on a metallic flat piece (1, 2) in the general shape of a T, provided with a plurality of holes (3, 4) for fixing to the wall of the building or the like, produced on the two arms (1, 2) of the T, and, on the vertical arm (2) of the T, a projecting lug (5) with an orifice (6) in it for introducing an anchoring member fixed to safety equipment, in particular of the harness type, carried by the person responsible for the fitting, repair or maintenance of said equipment.

2. A plate according to claim 1, more especially intended for equipment of the cable stop type, **characterised in that** it comprises a drilling (7) of appropriate size, disposed substantially at the intersection of the two arms (1, 2) of the T for fixing a pigtail feeder (8) or the like, for a cable stop.

3. A plate according to claim 1, more especially intended for equipment of the protective connection housing type (RP1), **characterised in that** it also comprises holes (12, 13) for fixing said housing (RP1) in line with the crossing of the two arms (1, 2) of the T, as well as, on one or other or both sides of the horizontal arm (1) of the T, a hole (9) the passage of a pigtail feeder (8) for serving said housing (RP1).

4. A plate according to claim 1, more especially intended for equipment of the distribution box type (BMX), **characterised in that** it also comprises an ancillary flange (20, 20') for fixing said box, attached and fixed to the vertical arm (2) of the T.

5. A plate according to one of claims 1 to 4, **characterised in that** it is formed of two flat rectangular welded bars (1, 2), said lug (5) carrying said orifice (6) for introducing an anchoring member also being formed of a flat rectangular bar welded to one of the faces of the vertical arm (2) of the T perpendicular to this.

6. A plate according to claim 5, **characterised in that** said lug (5') carrying said orifice (6) for introducing an anchoring member is inclined to the axis of the vertical arm (2).

7. A plate according to claim 6, **characterised in that** the hole (6') in the lug (5') is itself inclined by approximately 45° with respect to said vertical arm (2).

8. A plate according to one of claims 5 to 7, **characterised in that** said lug (5) carrying said orifice (6) for introducing an anchoring member is disposed at the bottom end of the vertical arm (3).

9. A plate according to claim 5 or 6, **characterised in that** said lug (5') carrying said orifice (6') for introducing an anchoring member is disposed in the central part of the vertical arm (2).
